(19) Europäisches Patentamt

European Patent Office

Office européen des brevets

(11) **EP 2 012 007 B1**

(12) **EUROPEAN PATENT SPECIFICATION**

(45) Date of publication and mention of the grant of the patent:
**28.09.2016 Bulletin 2016/39**

(51) Int Cl.:
*F03D 3/00* *(2006.01)*          *F03D 3/04* *(2006.01)*

(21) Application number: **07013159.4**

(22) Date of filing: **05.07.2007**

(54) **Vertical axis wind turbine**

Windturbine mit vertikaler Achse

Eolienne à axe vertical

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**07.01.2009 Bulletin 2009/02**

(73) Proprietor: **Atraves GmbH**
**80939 München (DE)**

(72) Inventors:
• **Vucak, Aleksandar**
  **80939 München (DE)**
• **Tesic, Nenad**
  **78220 Kotor Varos (BA)**

• **Tesic, Dragan**
  **78220 Kotor Varos (BA)**
• **Tesic, Miroslav**
  **78220 Kotor Varos (BA)**

(74) Representative: **Strehl Schübel-Hopf & Partner**
**Maximilianstrasse 54**
**80538 München (DE)**

(56) References cited:
**FR-A- 2 876 162          US-A- 194 822**
**US-A- 4 486 143          US-A1- 2003 059 306**
**US-A1- 2003 209 911**

## Description

### FIELD OF THE INVENTION

The invention relates to a vertical axis wind turbine that converts energy of wind into mechanical or electrical energy. The vertical axis wind turbine comprises a turbine rotor and wind leading vanes.

### BACKGROUND OF THE INVENTION

Wind turbines are widely known in the state of the art to convert wind energy into electrical or mechanical energy. For centuries it is known to use windmills as propulsion for water pumps or corn mills to produce wheat. Today, windmills and wind turbines are extensively used to produce electric energy free from pollution with wind as renewably energy carrier.

Wind turbines are classified according to the orientation of the axis of rotation of the rotor. This includes horizontal axis wind turbines, and vertical axis wind turbines. Horizontal axis wind turbines in general consist of a propeller and an energy converting system like an electric generator attached to the propeller. The working principle of such horizontal axis wind turbines is similar to that of classical windmills. Horizontal axis wind turbines have several disadvantages like danger to birds and air traffic, obscuring the landscape with farms of rotating windmills, and making noise. A further disadvantage of a horizontal axis wind turbine is that it must turn to face in wind direction. Horizontal axis wind turbines are made structural and have large dimensions and its production, transport, assemblage, and maintenance is very expensive. Further, serial connection of such turbines for the derivation of more power and higher energy is mechanically complicated and expensive.

In difference thereto, the exposure of vertical axis wind turbines to the wind remains constant regardless of the wind direction. However, vertical axis wind turbines known from the state of the art are less effective in comparison to horizontal axis wind turbines.

Vertical axis wind turbine known from the prior art have different dimensions, construction and angles of setting of the rotor blades. Vertical axis wind turbines in accordance with the preamble of present claim 1 are described in US 2003/0059306 A1 and US 2003/0209911 A1.

It is an object of the present invention to provide a vertical axis wind turbine with a higher efficiency than the wind turbines known from the prior art, i.e. which can capture more wind energy at same overall size, and which assembly is simply constructed of inexpensive and easy to produce materials. Further objects of the invention will be evident from review of the drawings and description of the invention below.

### SUMMARY OF THE PRESENT INVENTION

The object of the invention is solved by the turbine defined in claim 1. Disclosed is a vertical axis wind turbine having a turbine rotor and wind leading vanes, which vanes are located symmetrical circumferential around said turbine rotor. The dependent claims relate to preferred embodiments.

Further disclosed is a vertical axis wind turbine with a turbine rotor with rotor shaft, carrier of rotor blades and rotor blades disposed for rotation around the substantially vertical axis. The turbine includes vertical extending vanes circumferentially located around the rotor in an annular array. The vanes direct the wind flow to the rotor blades to drive the turbine and redirecting the wind from rotor blades wherein the power of wind effects rotation of turbine independently from the direction the wind blows. The wind turbine has a stator consisting of vertically extending stator vanes and a construction building the framework of the stator. The stator builds the fixed part of turbine and it can be fixed in a tower or other carrier of the turbine-set up. Advantageously the stator can be made of rods or simple steel sections.

On top and bottom side of the stator top and bottom plates can be located, which plates hold the mounting bearings for the turbine shaft, as shown in the drawings.

Further disclosed is a vertical axis wind turbine having a turbine rotor with n rotor blades and a stator having n vertical extending stator vanes, wherein said vanes are mounted circumferentially around said turbine rotor on a framework surrounding said turbine rotor, wherein said framework has the shape of a polygon with n tips and which centre-axis falls together with the rotation axis of said rotor, and wherein said stator vanes are mounted at the tips of said polygon extending along the outer side of said polygon in the direction of rotation of said turbine. Here, n = 4 to 12, preferred 6 to 10, and most preferred 8.

The rotor blades can be fixed on carrier arms, which carrier arms are fixed symmetrical at a turbine shaft in an angle relative to each other of 360°/n, said turbine shaft building the rotation axis of the rotor.

The rotor blades can have a horizontal width relative to the radius of said rotor in the range of 1:4 to

$$1:\sqrt{2}.$$

Preferably, the stator vanes have a horizontal width equal to the length of one side of said polygon framework of the stator.

The turbine setup can also comprise other parts like e.g. a gearbox to transmit the rotation of the turbine shaft to e.g. an electric generator or a pump, a clutch to separate the turbine rotor shaft from the gearbox, a brake mechanism to stop the turbine from rotating, and a controller unit, an inverter and other electronic devices needed to transform the mechanical energy produced by the rotation of the turbine into electric energy. When permanent magnet generators are used to transform the mechanical energy into electric energy no gearbox is needed.

The inventive positioning of the stator vanes and rotor blades results in a clockwise rotation of the rotor turbine, and clockwise rotation of the rotor turbine remains the same regardless of the wind direction and variations of the wind direction, like illustrated in the drawings. The orientation of the rotor blades and stator vanes may be reversed to drive the turbine rotor in a counter clockwise direction, if desired.

By the symmetrical shape of the inventive vertical axis wind turbine the turbine is always actively oriented into the wind regardless of the wind direction.

In a preferred embodiment of the invention the stator, in top view of the stator, has the shape of a symmetrical star with eight tips, and the entire surface that is exposed to wind is able to capture wind and direct the wind into the rotor assembly. The pathway of the air flow is illustrated in the drawings.

Through experimentation it has been estimated, that the optimal number of stator vanes and rotor blades is 8, to avoid excessive shielding of the wind and complexity of construction.

The horizontal width of rotor blades can vary between 1:2 and 2:1 of the horizontal width of stator vanes, while an equal width is preferred. The vertical length of the rotor blades is preferably nearly the vertical length of stator vanes. The surfaces of both, the vanes and the blades are preferable planar and made form strong but light materials like, light metals, or plastic materials like polycarbonats etc..

The overall size of the inventive wind turbine can vary in a large range, from small diameter which can be installed at houses or small cabins, or on telecommunication poles to provide electrical power to station equipment, up to large diameter which can be installed on a wind farm. The present invention also poses less danger to birds than the propeller type wind turbines. Further, the inventive wind turbine work quite, nearly without producing any noise, unlike the propeller type wind turbines known from the state of the art, and poses less risk to human working in its vicinity. Beside expanding the diameter of the inventive turbine and/or expanding the vertical length and volume of turbine, the power of the inventive turbine can be increased by serial connection of turbines, as shown in the drawings.

The following descriptions and drawings are selected from the present invention. Naturally, changes may be made to the disclosed embodiments, while still falling within the scope of the present invention. It will be understood, that the invention and its broad aspect include mechanical and functional equivalents of the elements described herein.

BRIEF DESCRIPTION OF THE DRAWINGS

In order that the invention may be readily understood, an embodiment of the invention is illustrated in the accompanying drawings and following descriptions.

Figure 1a is a perspective view of an inventive vertical axis wind turbine with a central turbine rotor, surrounded by an annular stator vane assembly symmetrically disposed. Top and bottom plates accomodate the carrier of rotor shaft with mounting bearings.

Figure 1b is a perspective view of a vertical axis wind turbine rotor with rotor shaft, carriers of the rotor blades, wherein the rotor blades are symmetrically disposed around the substantially vertical axis.

Figure 1c is a perspective view of a vertical axis wind turbine stator according to the invention showing an assembly of stator, top of a bottom carriers of the turbine shaft with mounting bearings, carriers of stator vanes, with the stator vanes symmetrically disposed around the vertical axis.

Figure 2 is a horizontal sectional view of an inventive vertical axis wind turbine with a central turbine rotor and a turbine stator with wind direction blowing from the bottom to top of the drawing, driving the rotor in a clockwise direction as drawn.

Figure 3 is a horizontal sectional view of the vertical axis wind turbine showing in terms of an example the windflow throughout the wind turbine, thereby driving the rotor in a clockwise direction as drawn.

Figure 4 is a perspective view of the vertical axis wind turbine according to the invention with 8 rotor blades, symmetrically disposed around the vertical axis of turbine surrounded by symmetrically located stator vanes.

Figure 5 is a perspective view of a serial connection of the inventive vertical axis wind turbines. This example shows serial connection of two turbines with a shaft coupling.

Figure 6a is a perspective view of a turbine setup with two vertical axis wind turbines, generator, shaft couplings in a tower holding the inventive vertical axis turbines.

Figure 6b is a perspective view of a serial connection of two inventive turbines, which are installed in telecommunication pole to provide electrical power to electronic and other devices for a telecommunication station.

DETAILED DESCRIPTION OF THE DRAWINGS

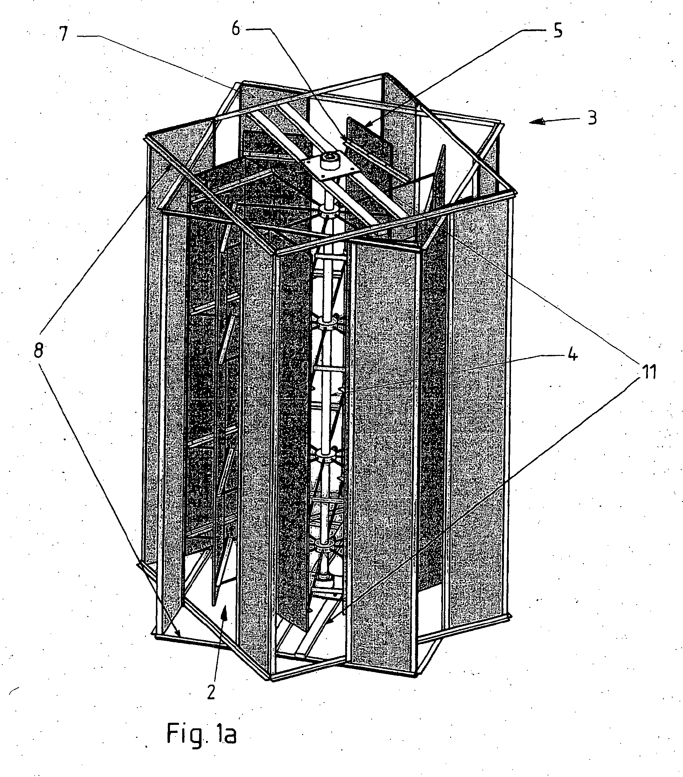

Figure 1a shows the general arrangement of an inventive vertical axis wind turbine 1, with a turbine rotor 2 with rotor blades 5, symmetrically disposed around the rotor shaft 4, rotating it in a clockwise direction around a substantially vertical axis, and a turbine stator 3 with stator vanes 7, and a stator framework 8. Reversed orientation of the rotor blades 5, stator vanes 7, carrier construction of rotor blades 6, and the framework of the stator 8, would drive the turbine rotor 2 in a counter clockwise direction, if desired. Circumferentially spaced around the rotor 2 in an annular array are eight vertical extending stator vanes 7. Each vane 7 has an inward facing surface with a carrier of the vane attached and an outward facing surface. The vanes 7 extending vertically from top plate 9 to bottom plate 10. Top and bottom plate 9 and 10 are preferably open worked, and can consist of different shapes of carriers 11 to mount the rotor shaft 4 by mounting bearings.

Underneath bottom plate 10 other parts like a generator 13, a gearbox etc. can be tighten up.

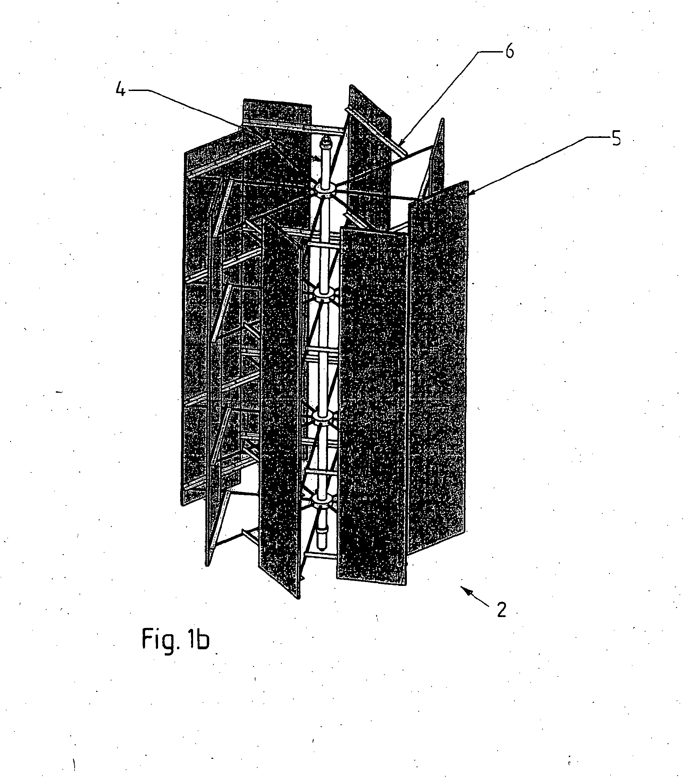

Figure 1b shows the general arrangement of a turbine rotor 2, with eight rotor blades 5 symmetrically disposed around the rotor shaft 4, and with a plurality of carriers 6 to hold the rotor blades 5, vertically disposed along the rotor shaft 4. The number of carriers 6 to hold the rotor blades 5 depends on the length of the rotor shaft 4 and should be optimized in relation to weight and stability of the turbine 1. Carriers 6 of the rotor blades 5 can have different shapes, and the shape shown in this figure is only an example of the preferred shape. The rotor blades are symmetrically disposed around the vertical axis.

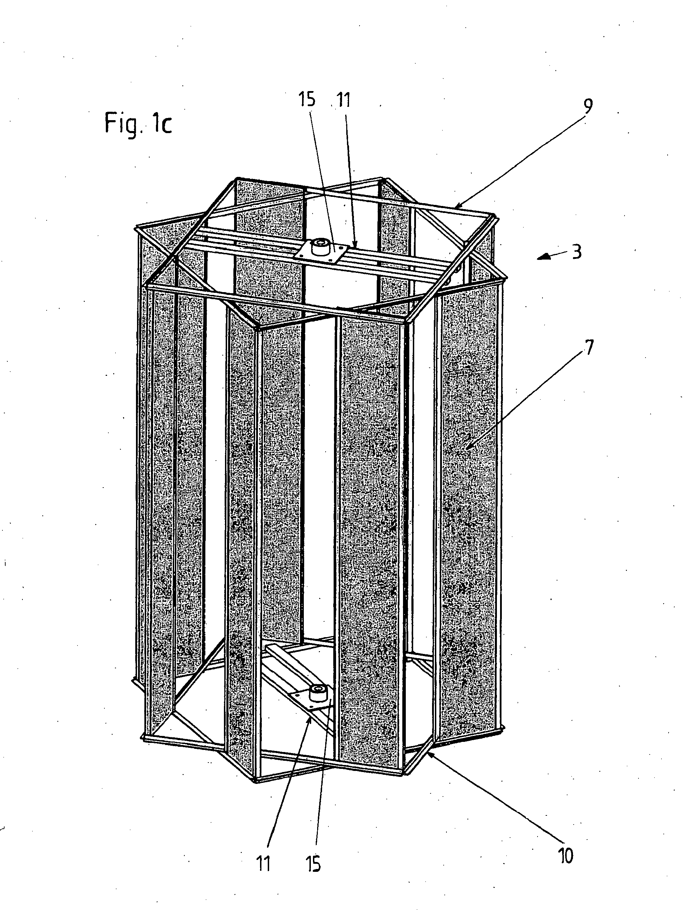

Figure 1c shows the general arrangement of an inventive turbine stator 3, with stator framework 8, with carriers 11 of rotor shaft 4, with mounting bearings 15, and with eight stator vanes 7, symmetrically located around the rotor 2. The stator vanes 7 extend vertically from the top plate 9 to the bottom plate 10, and are used to redirect the airflow to the turbine rotor 2. The carriers of the stator vanes can have different shapes, and an example of preferred shape is shown on this figure. In top view of the wind turbine, stator 3 has the shape of a symmetrical star with eight tips, which results from two equal squares lying upon each other twisted by 45°. The extremely simple construction provided in the example results in an easy fabrication and maintenance.

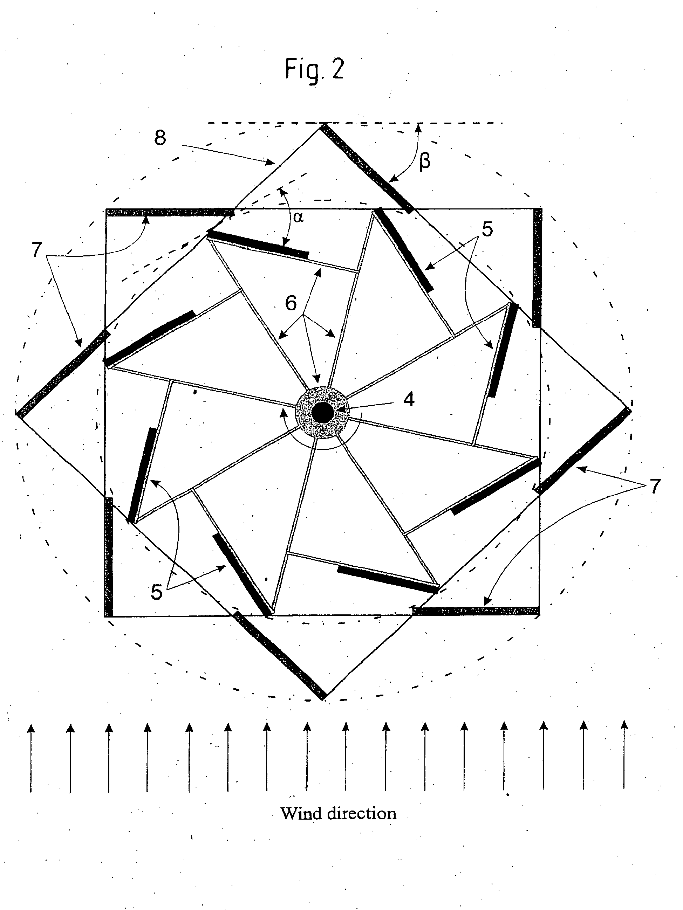

Figure 2 is a horizontal sectional view of the vertical axis wind turbine 1 with central turbine rotor 2, rotor (turbine) shaft 4, and turbine stator 3, with wind direction blowing from the bottom to top of the drawing, driving the rotor 2 in a clockwise direction. Top view shows, that base of the stator framework 8, having the shape of a symmetrical star with eight tips, and with stator vanes 7, set on one side of each star's tip. Reverse orientation of the rotor blades 5 and the stator vanes 7 on opposite sides of star tips will invert the direction of rotation of the turbine rotor 2 in a counter clockwise direction, if desired. Rotor blades 5 are set on angle $\alpha$ (from 30° to 60°, preferable angle is $\alpha$=45°, as shown on this Figure) in relation to tangent on circumscribe of rotor's path or an angle of 30° to 60° relative to the carrier arm of the rotor blade, respectively. Stator vanes 7 are set on angle $\beta$, following the shape of the stator framework (shape of symmetrical star with eight arms), preferable at an angle $\beta$ of 45°, as shown on this Figure.

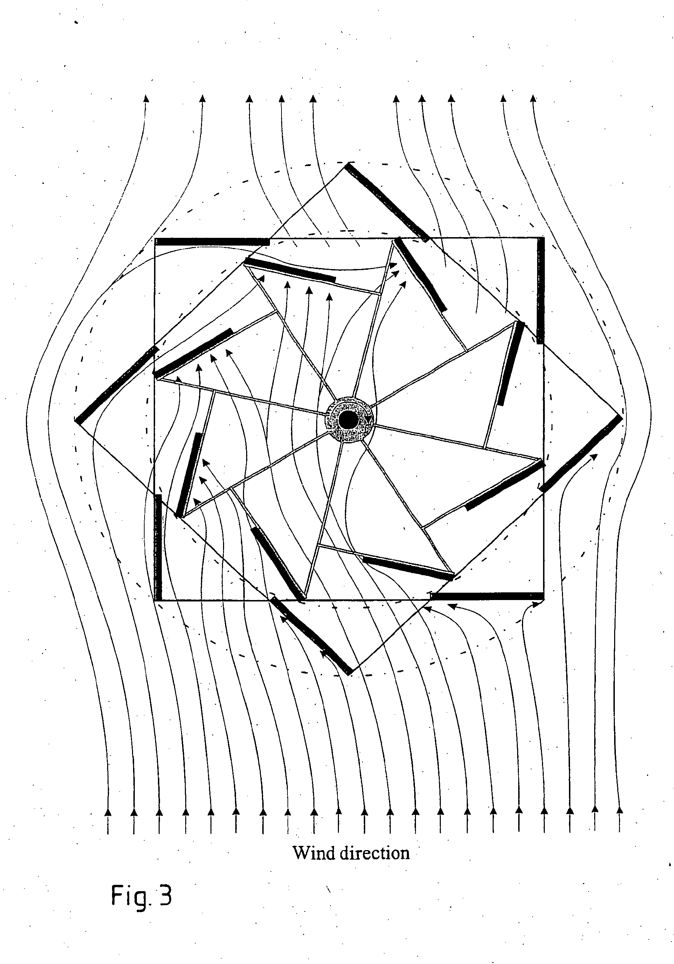

Figure 3 is a horizontal sectional view of the vertical axis wind turbine 1, showing by terms of an example the wind flow throughout the wind turbine 1, driving the rotor 2 in a clockwise direction, as drawn. As seen in this Figure, inward facing surfaces and outward facing surfaces of each stator vane 7 and each rotor blade 5 function to redirect the wind flow to increase rotation of the turbine rotor 2. In the embodiment shown the rotor blades 5 and the stator vanes 7 have an uniform horizontal cross-section throughout their vertical length and preferably have planar vertical surfaces, resulting in a simple construction and maintenance.

However, rotor blades 5 and stator vanes 7 may be made from different materials and can have different profiles, like e.g. wing profiles to increase the efficiency of the inventive turbine further.

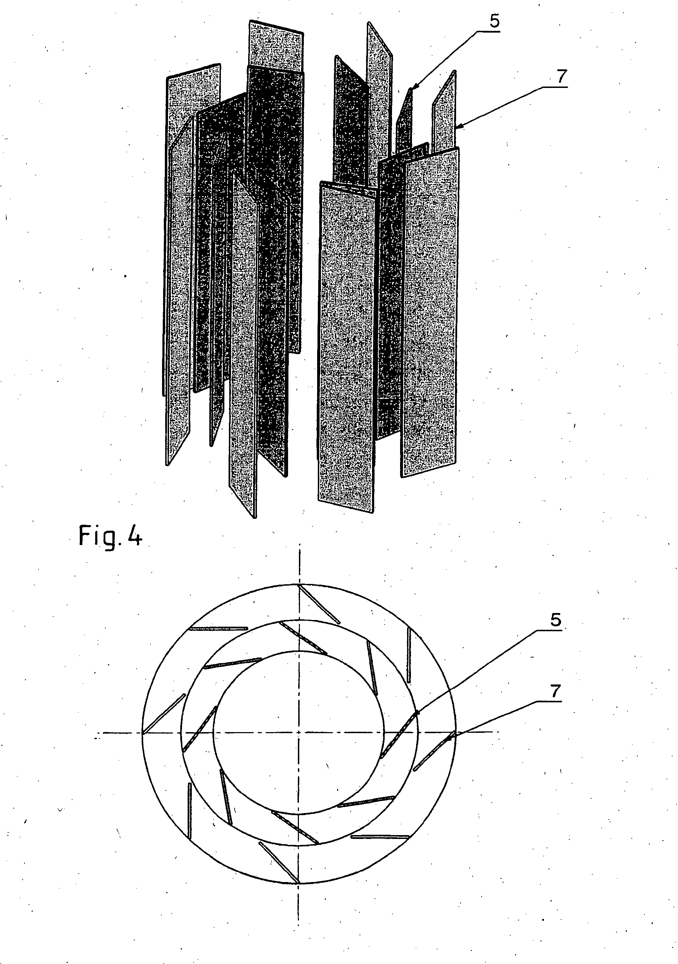

Figure 4 is a perspective view and top view of an inventive vertical axis wind turbine 1 with rotor blades 5 symmetrically disposed around the vertical axis of the turbine, surrounded by symmetrically located stator vanes 7. From this figure, there can be seen the assembly of the rotor blades 5 and the stator varies 7 around the substantially vertical axis.

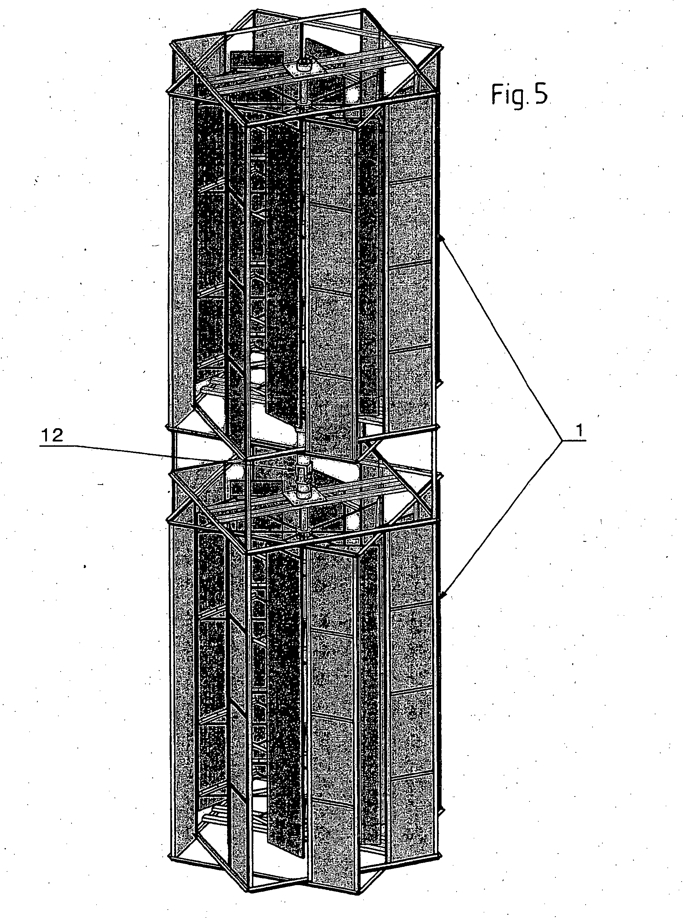

Figure 5 is a perspective view of a serial connection of vertical axis wind turbines 1. This example shows a serial connection of two turbines 1 with a shaft coupling 12. By the same principle of serial connection multiple wind turbines can be coupled to increase the overall turbine power.

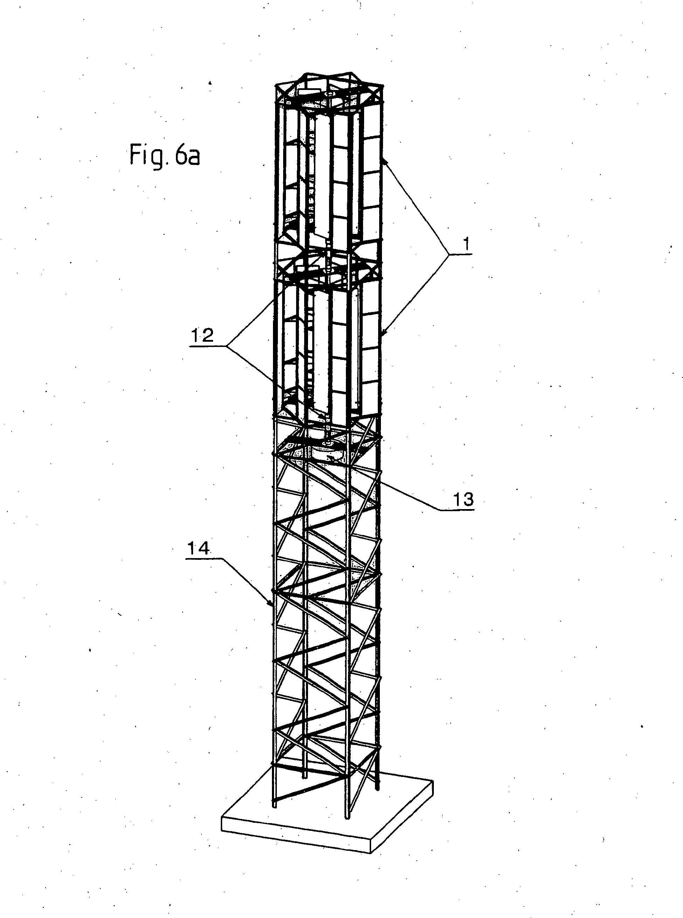

Figure 6a is a perspective view of a turbine setup with two vertical axis wind turbines 1, generator 13, shaft couplings 12, and tower 14. Such a wind turbine setup is also ideal for driving a pump to convey water. Because of its simple but sturdy design and the few moving parts, production of the inventive turbine is easy and relatively cheap, while the turbine requires less maintenance.

Other components of the turbines 1, such as the generator 13, or a water pump, gearbox etc., can be located at the base of the tower or the pole 14. Bevel gears and power shafts can then be used to transmit power to the gearbox or water pump. This will further reduce air resistance, turbulence and stress to the turbine structure.

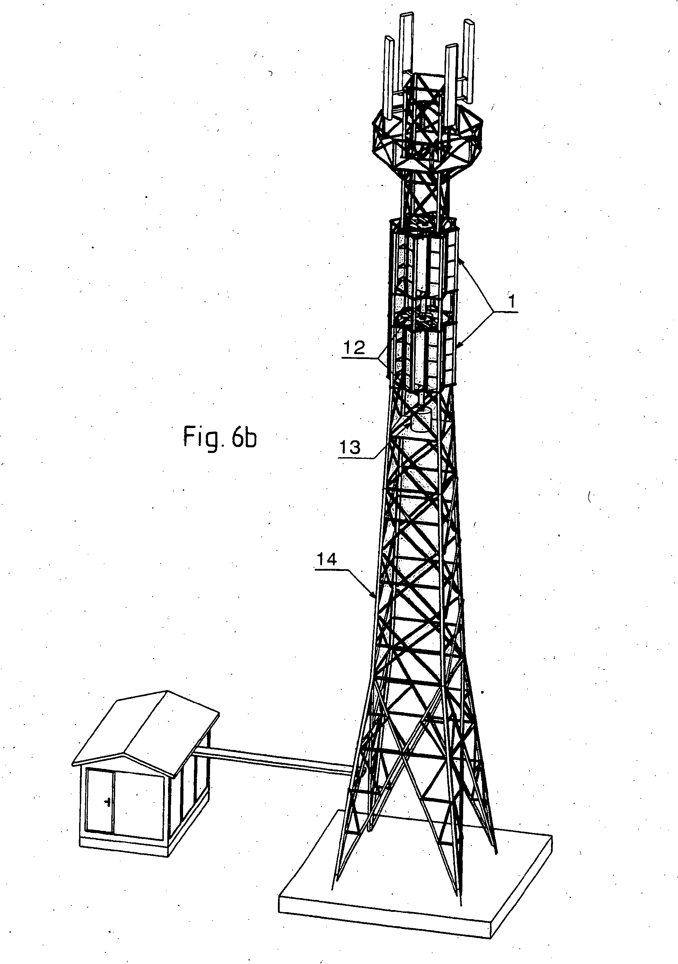

Figure 6b is a perspective view of a serial connection of two inventive turbines 1, which are installed in telecommunication tower 14 to provide electrical power to electronic and other devices for a telecommunication station. The inventive wind turbines 1 can be used in a combination with solar panels.

## REFERENCE LIST

1   vertical axis wind turbine
2   turbine rotor
3   turbine stator
4   rotor shaft
5   rotor blade
6   carrier for rotor blade
7   stator vane
8   framework of stator
9   top plate
10  bottom plate
11  carries to mount the motor-shaft
12  shaft coupling
13  generator
14  tower
15  mounting bearings

## Claims

1. A vertical axis wind turbine (1) having a turbine rotor (2) and wind leading vanes (7), which vanes (7) are located symmetrically circumferentially around said turbine rotor (2), wherein the wind leading vanes (7) are fixed on a stator (3), which turbine (1) is **characterised in** having a turbine rotor (2) with 8 rotor blades (5) and a stator (3) having 8 vertically extending stator vanes (7), wherein said vanes (7) are mounted circumferentially around said turbine rotor (2) on a framework (8) surrounding said turbine rotor (2), wherein said framework (8) has the shape of a polygon with 8 tips and whose centre-axis falls together with the rotation axis of said rotor (2), wherein the stator (3), when viewed from above, has the shape of a symmetrical star with 8 tips, and wherein said stator vanes (7) are mounted at the tips of said polygon extending along the outer side of said polygon in the direction of rotation of said turbine (1), and wherein said rotor blades (5) are fixed on carrier arms, which carrier arms are fixed symmetrically at a turbine shaft (4) in an angle relative to each other of 45°, said turbine shaft (4) building the rotation axis of the rotor (2).

2. A wind turbine (1) according to claim 1, wherein said rotor blades (5) have a horizontal width relative to the radius of said rotor (2) in the range of 1:4 to $1:\sqrt{2}$.

3. A wind turbine (1) according to one of the preceding claims, wherein said vanes (7) have a horizontal width relative to the horizontal width of said rotor blades (5) in the range of 1:2 to 2:1, preferably 1:1.

4. A wind turbine (1) according one of the preceding claims, wherein said stator vanes (7) have a horizontal width equal to the length of one side of said polygon framework (8).

## Patentansprüche

1. Windturbine (1) mit vertikaler Achse, die einen Turbinenrotor (2) und Windleitbleche (7) aufweist, wobei die Bleche (7) umfangsweise symmetrisch um den Turbinenrotor (2) angeordnet sind, wobei die Windleitbleche (7) an einem Stator (3) befestigt sind, wobei die Turbine (1) **dadurch gekennzeichnet ist, dass** sie einen Turbinenrotor (2) mit 8 Rotorblättern (5) und einen Stator (3) mit 8 vertikal verlaufenden Statorblechen (7) aufweist, wobei die Bleche (7) umfangsweise um den Turbinenrotor (2) an einem den Turbinenrotor (2) umgebenden Gerüst (8) befestigt sind, wobei das Gerüst (8) die Form eines Polygons mit 8 Spitzen hat, dessen Mittelachse mit der Drehachse des Rotors (2) zusammenfällt, wobei der Stator (3) von oben gesehen die Form eines symmetrischen Sterns mit 8 Spitzen hat, und wobei die Statorbleche (7) an den Spitzen des Polygons befestigt sind und längs der Außenseite des Polygons in der Drehrichtung der Turbine (1) verlaufen, und wobei die Rotorblätter (5) an Trägerarmen befestigt sind, die symmetrisch an einer Turbinenwelle (4) in einem Relativwinkel von 45° zueinander befestigt sind, wobei die Turbinenwelle (4) die Drehachse des Rotors (2) bildet.

2. Windturbine (1) nach Anspruch 1, wobei die Rotorblätter (5) eine horizontale Breite aufweisen, die relativ zu dem Radius des Rotors (2) in dem Bereich von 1:4 bis $1:\sqrt{2}$ liegt.

3. Windturbine (1) nach einem der vorstehenden Ansprüche, wobei die Bleche (7) eine horizontale Breite aufweisen, die relativ zu der horizontalen Breite der Rotorblätter (5) in dem Bereich von 1:2 bis 2:1 liegt, und vorzugsweise 1:1 ist.

4. Windturbine (1) nach einem der vorstehenden Ansprüche, wobei die Statorbleche (7) eine horizontale Breite aufweisen, die gleich der Länge einer Seite des Polygongerüsts (8) ist.

## Revendications

1. Turbine d'éolienne à axe vertical (1), comportant un rotor de turbine (2) et des aubes d'attaque au vent (7), ces aubes (7) étant disposées symétriquement de façon circonférentielle autour dudit rotor de turbine (2), dans laquelle les aubes d'attaque au vent (7) sont fixées sur un stator (3), cette turbine (1) étant **caractérisée en ce qu'**elle comporte un rotor de turbine (2) avec 8 pales de rotor (5) et un stator (3) comportant 8 aubes de stator s'étendant verticalement (7), lesdites aubes (7) étant montées de façon circonférentielle autour dudit rotor de turbine (2) sur une ossature (8) entourant ledit rotor de turbine (2), ladite ossature (8) ayant la forme d'un polygone avec 8 sommets, et son axe central coïncide avec l'axe de rotation dudit rotor (2), le stator (3), vu du dessus, ayant la forme d'une étoile symétrique avec 8 sommets, et lesdites aubes de stator (7) étant montées au niveau des sommets dudit polygone s'étendant le long du côté extérieur dudit polygone dans la direction de rotation de ladite turbine (1), et lesdites pales de rotor (5) étant fixées sur des bras porteurs, ces bras porteurs étant fixés de façon symétrique au niveau d'un arbre de turbine (4) selon un angle de 45° les uns par rapport aux autres, ledit arbre de turbine (4) constituant l'axe de rotation du rotor (2).

2. Turbine d'éolienne (1) selon la revendication 1, dans laquelle lesdites pales de rotor (5) ont une largeur horizontale par rapport au rayon dudit rotor (2) dans la plage de 1:4 à $1 : \sqrt{2}$.

3. Turbine d'éolienne (1) selon l'une des revendications précédentes, dans laquelle lesdites aubes (7) ont une largeur horizontale par rapport à la largeur horizontale desdites pales de rotor (5) dans la plage de 1:2 à 2:1, et de préférence de 1:1.

4. Turbine d'éolienne (1) selon l'une des revendications précédentes, dans laquelle lesdites aubes de stator (7) ont une largeur horizontale égale à la longueur d'un côté de ladite ossature polygonale (8).

Fig. 1a

Fig. 1b

Fig. 1c

## Fig. 2

Wind direction

Wind direction

Fig. 3

Fig. 4

Fig. 5

Fig. 6a

Fig. 6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030059306 A1

- US 20030209911 A1